# EUROPEAN PATENT SPECIFICATION

(11) **EP 2 479 091 B1**
(45) Date of publication and mention of the grant of the patent: **20.04.2016**
(21) Application number: 09849472.7
(22) Date of filing: 15.09.2009
(51) Int. Cl.: B62J 37/00, B62J 99/00, B62K 19/30, B62K 25/20, B62M 7/12

(54) **ELECTRICALLY POWERED TWO- OR THREE-WHEELED VEHICLE WITH A SPECIAL WIRING STRUCTURE**
ELEKTRISCH BETRIEBENES ZWEI- ODER DREIRÄDRIGES FAHRZEUG MIT SONDERVERKABELUNGSSTRUKTUR
VÉHICULE ÉLECTRIQUE À DEUX OU TROIS ROUES AVEC STRUCTURE SPECIFIQUE DE CÂBLAGE

(43) Date of publication of application: 25.07.2012
(73) Proprietor: Honda Motor Co., Ltd., Minato-ku Tokyo 107-8556 (JP)
(72) Inventor: MIMURA Masahide, Wako-shi Saitama 351-0193 (JP); NIIZUMA Keiichiro, Wako-shi Saitama 351-0193 (JP); KAWASAKI Yuichi, Wako-shi Saitama 351-0193 (JP); AKIBA Ryuji, Wako-shi Saitama 351-0193 (JP)
(74) Representative: Beder, Jens
(86) International application number: PCT/JP2009/066113
(87) International publication number: WO 2011/033613

(56) References cited:
- EP-A1- 1 627 805
- FR-A1- 2 874 357
- JP-A- 2003 120 450
- JP-A- 2003 127 956
- JP-B2- 4 188 641

## Description

### TECHNICAL FIELD

The present invention relates to an electric two/three-wheeled vehicle in which: pivot plates are provided in lower portions of a pair of left and right rear frames, respectively, the rear frames constituting a part of a body frame and extending rearwardly and upwardly; an electric motor is housed in a swing arm supported in a swingable manner to the pivot plates with a support shaft therebetween, the electric motor exerting power for driving a rear wheel pivotally supported to a rear portion of the swing arm; a high-voltage battery supplying an electric power to the electric motor is supported to the body frame and arranged forward of the support shaft; the high-voltage battery is connected via a high-voltage wiring to a power drive unit mounted on the swing arm so as to convert a direct current supplied from the high-voltage battery into an alternating current and then supply the alternating current to the electric motor, and especially relates to an improvement of a wring structure.

### BACKGROUND ART

With regard to electric two-wheeled vehicles, Patent Document 1 already discloses an electric two-wheeled vehicle in which a wiring leading to a power drive unit disposed in a swing arm is taken out upwardly from a front upper surface of the swing arm, and is arranged to extend forwardly as passing above a support shaft supporting the swing arm to a body frame.
Patent Document 1: Japanese Patent No. 4188641.

Further document FR 2 874 357 discloses a similar vehicle according to the preamble of claim 1.

### DISCLOSURE OF THE INVENTION

### PROBLEMS TO BE SOLVED BY THE INVENTION

However, the one disclosed in Patent Document 1 as described above has a possibility that a bending force is applied to a portion of the wiring (a portion at which the wiring is taken out from the swing arm) due to swing of the swing arm. Further, a high-voltage wiring is thick and colored, and an electric two-wheeled vehicle does not have an exhaust muffler and the like arranged lateral to the vehicle body unlike a vehicle having an internal combustion engine mounted therein. Due to these factors, the high-voltage wiring stands out more than necessary in the visual recognition and the like from obliquely rear of the vehicle, and therefore may affect the design of other components.

The present invention has been carried out in view of these circumstances, and an object thereof is to provide a wiring structure in an electric two/three-wheeled vehicle, the wiring structure being capable of avoiding a bending force to be applied to a high-voltage wiring and improving an external appearance by making the high-voltage wiring less visible from the outside of the vehicle body.

### MEANS TO SOLVE THE PROBLEMS

In order to achieve the above object, according to a first feature of the present invention, there is provided a wiring structure in an electric two/three-wheeled vehicle in which: pivot plates are provided in lower portions of a pair of left and right rear frames, respectively, the rear frames constituting a part of a body frame and extending rearwardly and upwardly; an electric motor is housed in a swing arm supported in a swingable manner to the pivot plates with a support shaft therebetween, the electric motor exerting power for driving a rear wheel pivotally supported to a rear portion of the swing arm; a high-voltage battery supplying an electric power to the electric motor is supported to the body frame and arranged forward of the support shaft; the high-voltage battery is connected via a high-voltage wiring to a power drive unit mounted on the swing arm so as to convert a direct current supplied from the high-voltage battery into an alternating current and then supply the alternating current to the electric motor, characterized in that the high-voltage wiring, which extends obliquely upwardly and forwardly toward one rear frame in a vehicle width direction out of the pair of left and right rear frames from an upper surface of the power drive unit, extends rearwardly and upwardly along an inner side of the one rear frame in the vehicle width direction and then further extends toward the high-voltage battery located forward thereof.

According to a second feature of the present invention, in addition to the first feature, a low-voltage wiring leading to a control unit installed in the power drive unit extends from an upper surface of the power drive unit, then further extends along an inner side of the other rear frame in the vehicle width direction out of the pair of left and right rear frames, and is aligned with a main harness supported to a vehicle body.

According to a third feature of the present invention, in addition to the first or second feature, the high-voltage battery is connected not only to the high-voltage wiring that is a first high-voltage wiring connected to the power drive unit but also to a second high-voltage wiring connected via a DC-DC converter to a receiver-side connector connected to a feeder-side connector for supplying charging electric power, and the first and second high-voltage wirings are arranged in one side in the vehicle width direction of the vehicle body with respect to a center line in the vehicle width direction of the vehicle body.

According to a fourth feature of the present invention, in addition to the third feature, the receiver-side connector is arranged in the one side in the vehicle width direction of the vehicle body.

According to a fifth feature of the present invention, in addition to the first feature, the high-voltage wiring is covered by a vehicle body cover which covers the body frame so that the vehicle body cover and the body frame together form the vehicle body.

### EFFECTS OF THE INVENTION

According to the first feature of the present invention, the high-voltage wiring, which connects the power drive unit mounted on the swing arm and the high-voltage battery located forward of the support shaft for supporting the swing arm in a swingable manner, extends obliquely upwardly and forwardly toward one of the rear frames from the upper surface of the power drive unit, and the high-voltage wiring further extends rearwardly and upwardly along the inner side of the one of the rear frames and then extends toward the high-voltage battery located forward thereof. Accordingly, it is possible to bend the high-voltage wiring so as to allow swing of the swing arm while preventing a bending force from being applied to the high-voltage wiring during the swing of the swing arm. In addition, it is possible to make the high-voltage wiring less visible from obliquely rearward of the vehicle by having the high-voltage wiring extending obliquely upwardly and frontwardly from the upper surface of the power drive unit, and it is also possible to make the high-voltage wiring less likely to stand out to the outside of the vehicle body by hiding the high-voltage wiring with the one of the rear frames in the vehicle width direction.

Further, according to the second feature of the present invention, the low-voltage wiring, which extends forwardly from the upper surface of the power drive unit, is arranged along the inner side of the other rear frame of the pair of left and right rear frames and aligned with the main harness. Accordingly, the low-voltage wiring and the main harness are arranged at a position away from the high-voltage wiring. Therefore, it is possible to prevent noise from the high-voltage wiring from reaching the low-voltage wiring and the main harness side.

According to the third feature of the present invention, the high-voltage battery is connected not only to the high-voltage wiring that is a first high-voltage wiring connected to the power drive unit but also to the second high-voltage wiring, which is connected to the receiver-side connector via the DC-DC converter, and the first and second high-voltage wirings are arranged in one side in the vehicle width direction with respect to the center line of the vehicle body in the vehicle width direction. Accordingly, it is possible to achieve a compact arrangement by putting together in one site respective connecting portions of the first and second high-voltage wirings to the high-voltage battery.

According to the fourth feature of the present invention, the receiver-side connector is arranged in the one side of the vehicle body B in the vehicle width direction. Accordingly, the second high-voltage wiring can be made shorter.

Further, according to the fifth feature of the present invention, the high-voltage wiring is covered by the vehicle body cover. Accordingly, it is possible to make the high-voltage wiring less visible from the outside of the vehicle body.

### BRIEF DESCRIPTION OF THE DRAWINGS

[FIG. 1] FIG. 1 is a side view of an electric two-wheeled vehicle. (Embodiment 1)
[FIG. 2] FIG. 2 is a side view of the electric two-wheeled vehicle with a vehicle body cover being omitted. (Embodiment 1)
[FIG. 3] FIG. 3 is a schematic system diagram of an electric system. (Embodiment 1)
[FIG. 4] FIG. 4 is an enlarged view of an essential part in FIG. 2. (Embodiment 1)
[FIG. 5] FIG. 5 is a view from a direction of an arrow 5 in FIG. 4. (Embodiment 1)
[FIG. 6] FIG. 6 is a perspective view showing a rear part of a battery case as seen from obliquely frontward. (Embodiment 1)
[FIG. 7] FIG. 7 is a view, from a direction of an arrow 7 in FIG. 4, of a high-voltage wiring providing a connection between a high-voltage battery and a power drive unit. (Embodiment 1)

### DESCRIPTION OF REFERENCE NUMERALS AND SYMBOLS

22 ... Swing arm
23 ... Electric motor
29 ... Rear frame
30 ... Pivot plate
32 ... Support shaft
36 ... High-voltage battery
41 ... Vehicle cover
71 ... Power drive unit
77 ... Feeder-side connector
78 ... Receiver-side connector
79 ... DC-DC converter
84 ... Control unit
86 ... First high-voltage wiring
87 ... Second high-voltage wiring
92 ... Low-voltage wiring
93 ... Main harness
B ... Vehicle body
F ... Body frame
WR ... Rear wheel

### BEST MODE FOR CARRYING OUT THE INVENTION

A mode for carrying out the preset invention will be described below with reference to the attached drawings.

### EMBODIMENT 1

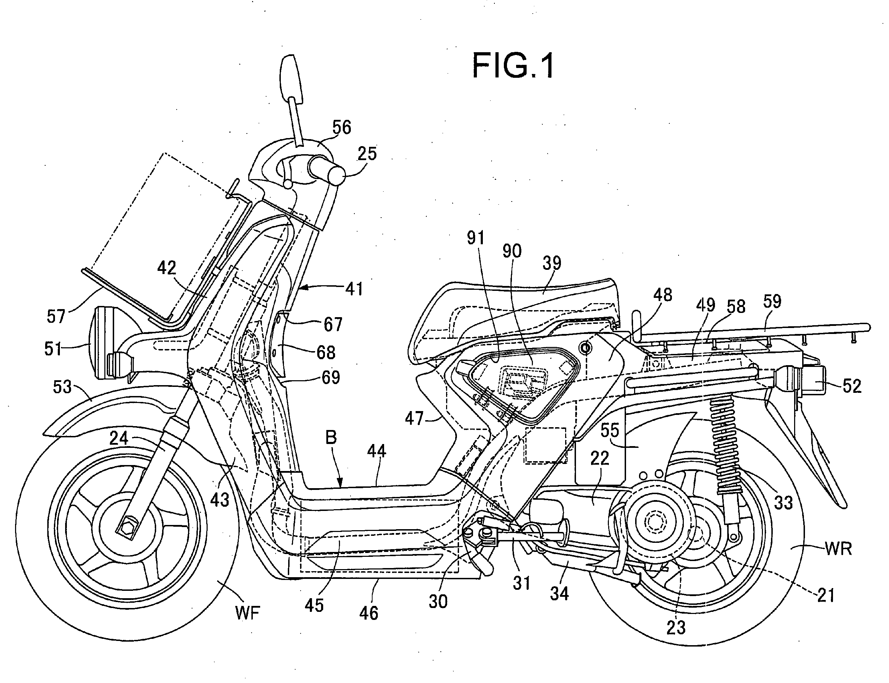

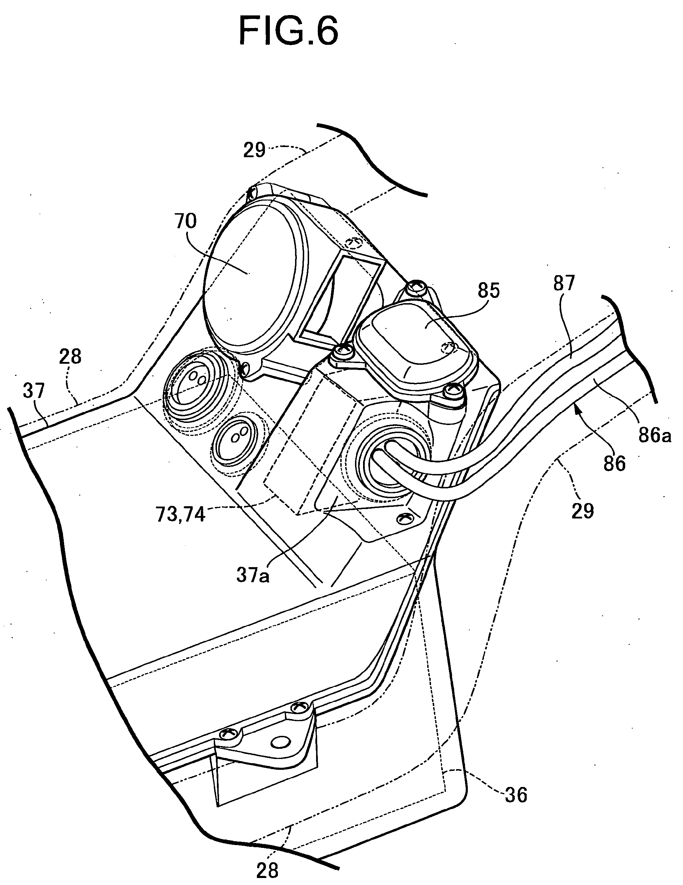

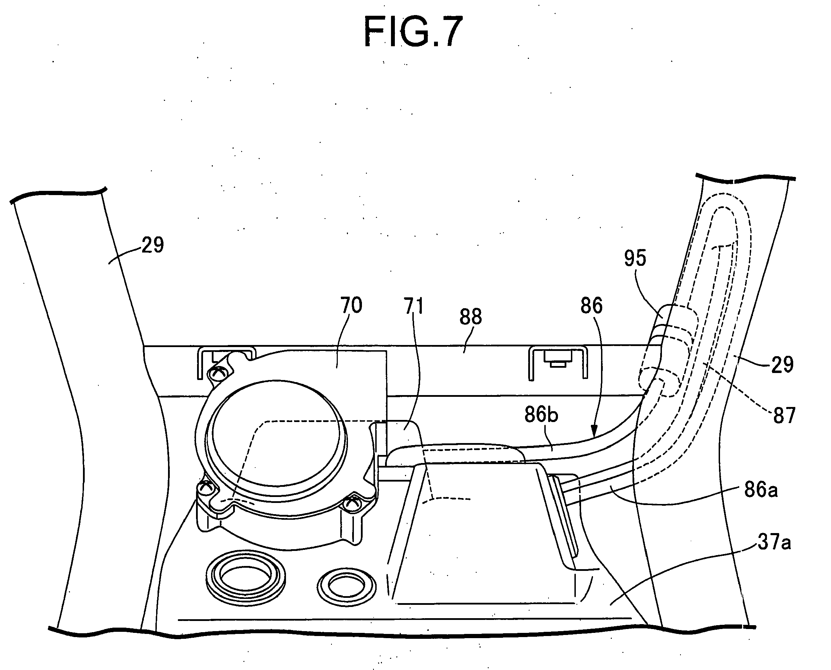

Embodiment 1 of the present invention will be described by referring to FIG. 1 to FIG. 7. First, in FIG. 1, this electric two-wheeled vehicle is a scooter-type electric two-wheeled vehicle having a low-deck floor 44, and is formed so that rotative power exerted by an electric motor 23 provided inside a swing arm 22, which pivotally supports with a rear portion thereof an axle 21 of a rear wheel WR, can rotationally drive the rear wheel WR.

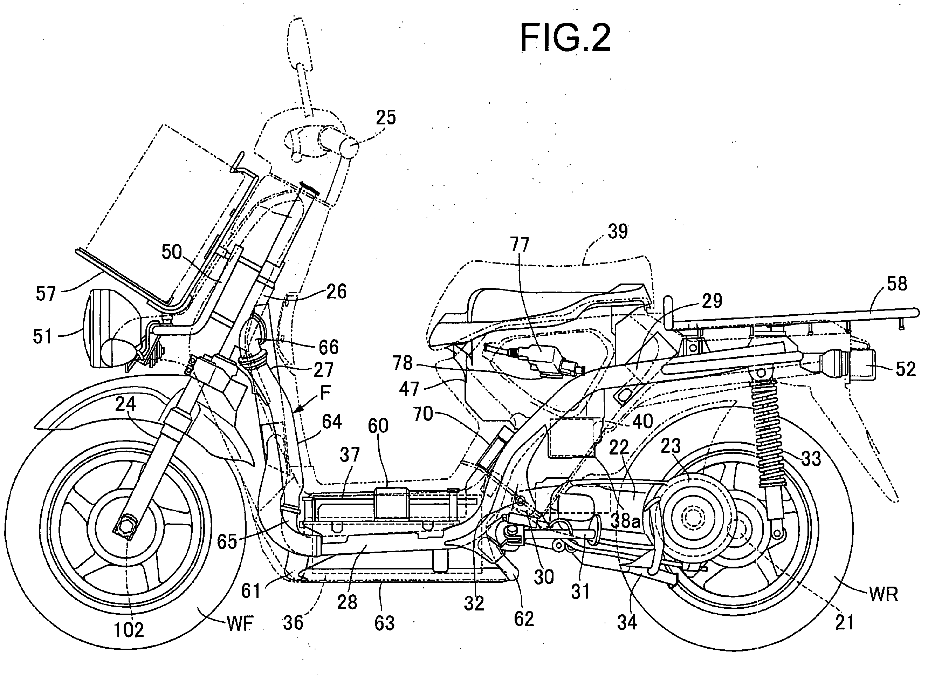

In FIG. 2, a body frame F of this electric two-wheeled vehicle has: a head pipe 26 which supports in a steerable manner a front fork 24 pivotally supporting a front wheel WF and a steering handle 25 connected to an upper portion of the front fork 24; a down frame 27 which extends from the head pipe 26 rearwardly and downwardly; a pair of left and right under flames 28 ··· which are connected to a lower portion of the down frame 27 and extend rearwardly; and a pair of left and right rear frames 29 ··· which integrally continue to a rear end of these under frames 28 ··· and extend rearwardly and upwardly.

To pivot plates 30 ··· which are provided in a front portion of both of the rear frames 29 ··· of the body frame F, a side stand 31 for maintaining a vehicle body B to be in a standing state with a leftward inclination is attached in a rotatable manner, and a front portion of the swing arm 22 is supported in a swingable manner with a support shaft 32 therebetween. A rear cushion unit 33 is provided between a rear portion of the left rear frame 29 of the left and right rear framers ··· 29 and a rear portion of the swing arm 22. Further, a main stand 34 is attached to a front portion of the swing arm 22 in a rotatable manner.

A battery case 37 having therein a high-voltage battery 36 of, for example, 72V, which supplies electric power to the electric motor 23, is arranged between both of the under frames 28 ··· in such a manner as to be supported by both of the under frames 28 ···. Specifically, the high-voltage 36 is supported to both of the under frames 28 ··· of the body frame F at a position forward of the support shafts 32 ··· which support the swing arm 22 to the pivot plates 30 ··· in a swingable manner. Further, a storage box 38 which is arranged above the swing arm 22 as seen in a side view is arranged between both of the rear frames 29 ··· in such a manner as to be supported by both of the rear frames 29 ···, and this storage box 38 is covered from above by a riding seat 39 which is openable and closable. In addition, at a rear lower portion of the storage box 38, a battery storage part 38a storing a low-voltage battery 40 which supplies electric power at a low voltage of, for example, 12 V, to accessories, such as a front light 51, a tail light 52, and the like, is integrally formed in such a manner as to project downwardly.

The body frame F is covered by a vehicle body cover 41 made of a synthetic resin, the vehicle body cover 41 forming the vehicle body B together with the body frame F. The vehicle body cover 41 includes: a front cover 42 which covers the head pipe 26 from the front; a leg shield 43 which continues to the front cover 42 in such a manner as to cover, from the front, legs of a rider sitting on the riding seat 39; a low deck floor 44 which continues to a lower portion of the leg shield 43 so as to allow the legs of the rider sitting on the riding seat 39 to be placed thereon, and covers the battery case 28 from above; a pair of left and right floor side covers 45 ··· which are suspended from both sides of the low deck floor 44, respectively, in such a way as to cover both of the under frames 28 ··· from both sides; an under cover 46 which connects between lower edges of the respective left and right floor side covers 45; an under-seat front portion cover 47 which arises from a rear end of the low deck floor 44 in such a manner as to cover below the riding seat 39 from the front; a pair of left and right side covers 48 ··· which continue to both sides of the under-seat front portion cover 47, respectively, in such a manner as to cover below the riding seat 39 from the both sides; and a rear cover 49 which continues to both of the side covers 48 ··· in such a manner as to cover the rear wheel WR from above. The battery case 37 is covered by, of the vehicle body cover 41, the low deck floor 44, the floor side covers 45 ···, the under cover 46, the under-seat front portion cover 47, and the side covers 4 ···.

The front light 51 is disposed at a front end of the front cover 42 in such a manner as to be supported by a front stay 50 fixed to the head pipe 26, while the tail light 52 is attached to the rear frames 29 ···. Further, a front fender 53 which is arranged downward of the front cover 42 is attached to the front fork 24 in such a manner as to cover the front wheel WF from above, a rear fender 54 which covers the rear wheel WR from rearward obliquely above is connected to the rear cover 49, and a fender 55 which covers the rear wheel WR from frontward obliquely above is attached to a front portion of the swing arm 22. Further, a middle portion of the steering handle 25 is covered by a handle cover 56. A front carrier 57 which is arranged in front of the front cover 42 is supported by the front stay 50. A carrier 58 is arranged behind the riding seat 39 above the rear cover 49, and a carrier 59 which is arranged above the carrier 58 is attached to the rear frames 29 ··· in a detachably attachable manner.

A cross member 60 which crosses over a substantially center portion of the battery case 37 in a front and rear direction thereof is provided between both of the under frames 28 ···, and the low deck floor 44 is supported by the cross member 60. Further, a front portion protective member 61, which protects a front lower portion of the battery case 37 from the front, is provided between front portions of the respective left and right under frames 28 ··· in such a manner as to have its center portion connecting to a lower end of the down frame 27. A rear portion protective member 62, which protects a rear lower portion of the battery case 37 from the rear, is provided between rear portions of the respective left and right under frames 28 ···. Multiple lower portion protective members 63 ··· seach extending in the front and rear direction are provided between the front portion and rear portion protective members 61 and 62 in such a manner as to protect the battery case 37 from the below.

Respective downstream end portions of a pair of left and right cooling air inlet ducts 64 ··· are connected to a front portion of the battery case 37 through connecting pipes 65 ···. Both of the cooling air inlet ducts 64 ··· are arranged in such a manner as to extend along the down frame 27 while sandwiching the down frame 27 from both sides thereof inside the leg shield 43. Meanwhile, in the leg shield 43, at a position corresponding to a connecting portion of the down frame 27 to the head pipe 26, a depressed portion 67 which is depressed forwardly is formed. Then, a lid 68 which covers an upper portion of the depressed portion 67 is attached to the leg shield 43. Accordingly, an air inlet opening 69 is formed between a lower edge of the lid 68 and the depressed portion 67. Upstream ends of the respective cooling air inlet ducts 64 ··· are connected to the leg shield 43 through connecting pipes 66 ··· so as to communicate with the air inlet opening 69.

A cooling fan 70 is attached to a rear upper surface of the battery case 37. Air sucked in through the air inlet opening 69 by the action of the cooling fan 70 is introduced into the battery case 37 through the connecting pipes 66 ···, the cooling air inlet pipes 64 ···, and the connecting pipes 65 ···, so that the high-voltage battery 36 in the battery case 37 is cooled, and then the air is discharged to the outside from the battery case by the action of the cooling fan 70.

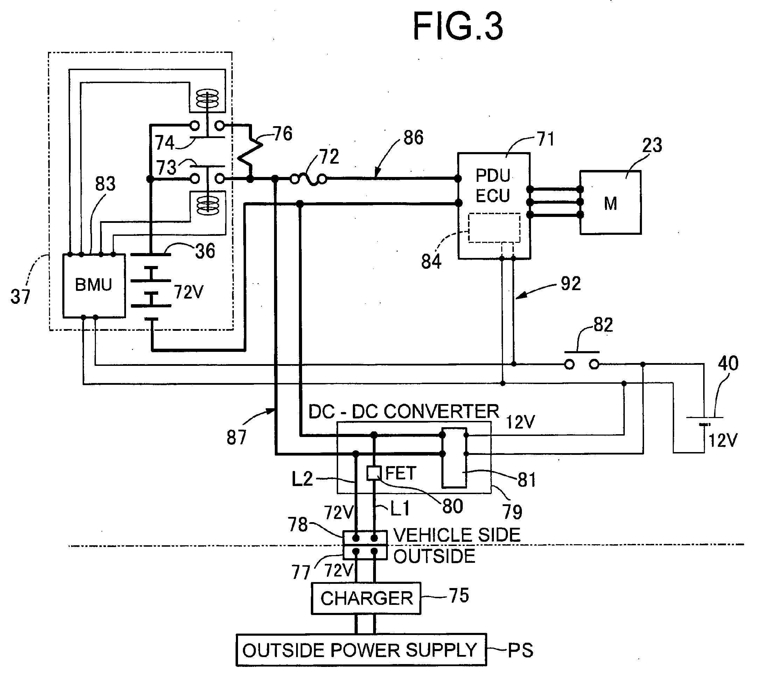

In FIG. 3, the electric motor 23 is driven by a power drive unit (PDU) 71 having a control unit 84 (refer to FIG. 3) installed therein. The power drive unit 71 is connected to a plus-side terminal of the high-voltage battery 36 via a fuse 72 and a first relay switch 73. The relay switch 73 is connected in parallel to a series circuit made up of a second relay switch 74 and a resistor 76. In the meantime, the high-voltage battery 36 and the low-voltage battery 40 can be charged from a charger 75, which is capable of outputting voltage as high as that of the high-voltage battery 36 when connected to an external power supply PS. A receiver-side connector 78 into which a feeder-side connector 77 continuing to the charger 75 connected to the external power supply PS can be inserted for connection is provided to the vehicle side, and the receiver-side connector 78 is connected to a DC-DC converter 79.

Then, the DC-DC converter 79 has a field-effect transistor 80 provided in the middle of one L1 of a pair of lines L1 and L2 which continue to the receiver-side connector 78, and a voltage drop circuit component 81 which is connected to both of the lines L1 and L2 so as to allow the voltage from the charger 75 to drop to a low voltage, for example, of 12 V. Both of the lines L1 and L2 of the DC-DC converter 79 are connected to a plus-side terminal of the high-voltage battery 36 via a parallel circuit made up of a series circuit, which is made up of the second relay switch 74 and the resistor 76, and the first relay switch 73, so as to supply high-voltage charging current to the high-voltage battery 36. The voltage drop circuit component 81 is connected to a plus-side terminal and a minus-side terminal of the low-voltage battery 40.

The control unit 84 installed in the power drive unit 71 is connected to the plus-side terminal of the low-voltage battery 40 via a main switch 82, and is connected to a minus-side terminal of the low-voltage battery 40. Further, On and Off of the first and second relay switches 73 and 74 are switched by control current output from a battery managing unit (BMU) 83 with supply of electric power from the low-voltage battery 40. The battery managing unit 83 is connected to a plus-side terminal of the low-voltage battery 40 via the main switch 82, and is also connected to a minus-side terminal of the low-voltage battery 40.

Then, when the main switch 82 is ON, the battery managing unit 83 firstly achieves a conduction state of the second relay switch 74 so as to apply electric current to the power drive unit 71 from the high-voltage battery 36 through the second relay switch 74, the resistor 76, and the fuse 72, and thereafter conducts the first relay switch 73. This prevents welding of the first relay switch 73 due to an inrush current to a capacitor provided inside the power drive unit 71.

Incidentally, the first relay switch 73, the second relay switch 74, and the battery managing unit 83 are stored in a battery case 37 storing the high-voltage battery 36.

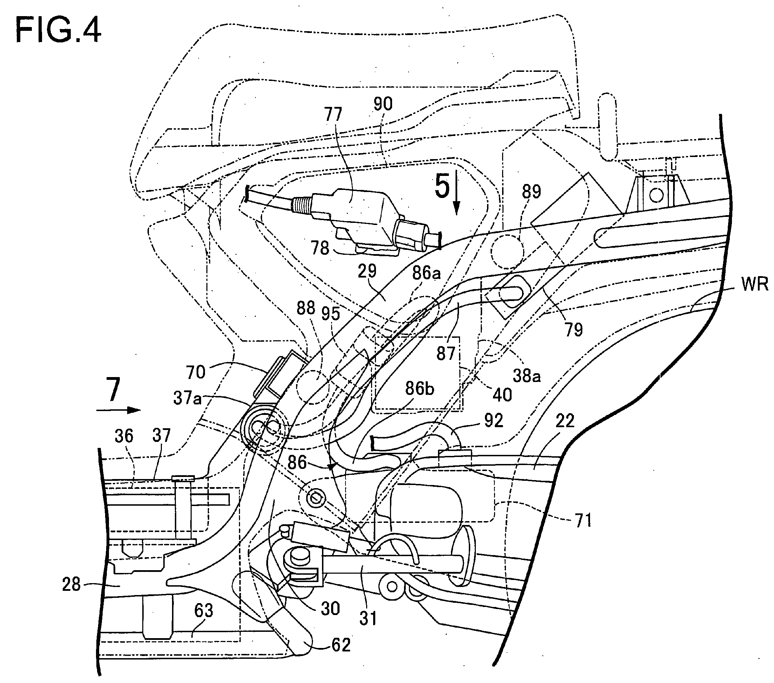

By referring to FIG. 4 to FIG 7 together, a rising portion 37a which rises upwardly is formed in a rear portion of the battery case 37. The cooling fan 70 is attached to a right-side upper surface of the rising portion 37a, while a lid member 85 which covers the fuse 72 from above is attached to a left-side upper surface of the rising portion 37a, the fuse 72 being housed in the rising portion 37a. The first and second relay switches 73 and 74 are also housed in the rising portion 73a.

In the meantime, the power drive unit 71 is mounted on a front portion of the swing arm 22 in such a manner as to be located forward of the rear wheel WR. A first high-voltage wiring 86 which connects between the power drive unit 71 and the high-voltage battery 36 extends, from an upper surface of the power drive unit 71, obliquely upwardly and forwardly toward one of the pair of left and right rear frames 29..., which is the left-side rear frame 29 in the present embodiment, in the vehicle width direction, extends rearwardly and upwardly along the inner side of the left-side rear frame 29, then extends toward the high-voltage battery 36 located forward thereof, and then is connected to the left-side surface of the rising portion 37a of the battery case 37. In addition, the first high-voltage wiring 86 is formed with an upstream portion 86a, which is located at the side of the high-voltage battery 36, and a downstream portion 86b, which is located at the side of the power drive unit 71, connected to each other via a coupler 95.

Further, the high-voltage batter 36 is connected not only to the first high-voltage wiring 86, which is connected to the power drive unit 71, but also to a second high-voltage wiring 87 connected to the receiver-side connector 78, which is connected to the feeder-side connector 77 for supplying of charging electric power, via the DC-DC converter 79. In the meantime, the storage box 38 is supported on a pair of front and rear cross members 88 and 89 which are provided between both of the rear frames 29..., on the body frame F. The DC-DC converter 79 is arranged rearward of the storage box 38 in such a manner as to be supported to the cross member 89, which is one of the cross members 88 and 89 located rearward of the other. The second high-voltage wiring 86 extends obliquely upwardly toward the left-side rear frame 29 from the same site as that of the first high-voltage wiring 86 on the upper surface of the power drive unit 71, further goes away from the left-side rear frame 29, and then is connected to the left-side surface of the DC-DC converter 79. In addition, the first and second high-voltage wirings 86 and 87 are covered by the under cover 46 and the side cover 48 of the vehicle body cover 41.

The receiver-side connector 78 which continues to the DC-DC converter 79 is arranged in one side of the vehicle body B in the vehicle width direction, which is the left side in the present embodiment. In a portion of the left-side side cover 48 of the vehicle body cover 41, the portion being located lower left of the riding seat 39, a depressed portion 91 covered by a lid member 90, which is openable and closable, is provided. Inside the depressed portion 91, the receiver-side connector 78 is fixedly arranged in such a manner as to be connectable to the feeder-side connector 77.

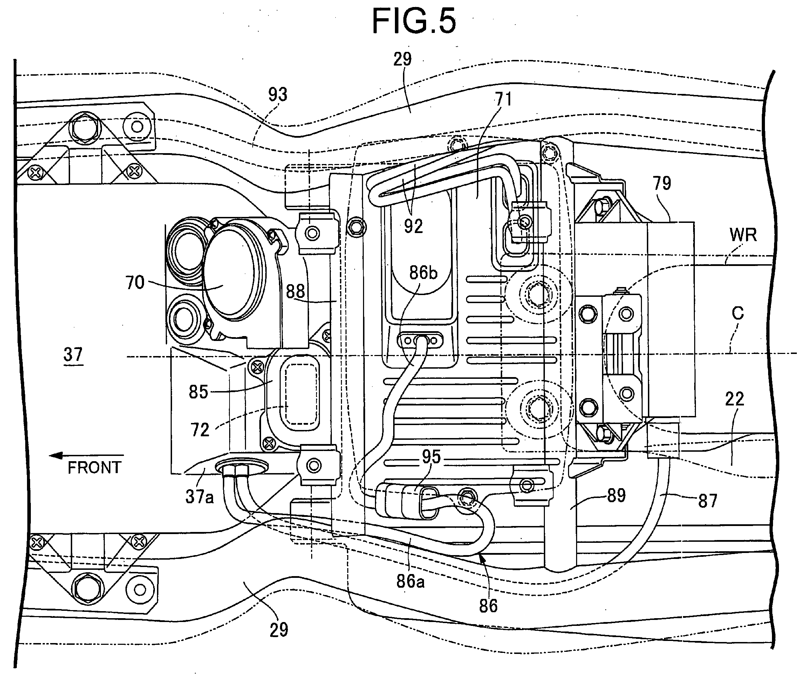

Accordingly, the first and second high-voltage wirings 86 and 87 are arranged in the one side in the vehicle width direction with respect to the center line C (refer to FIG. 5) of the vehicle body B in the vehicle width direction, which is the left side in the present embodiment.

Further, low-voltage wirings 92 ··· leading to the control unit 84, which is installed inside the power drive unit 71, extend along the inner side of the other rear frame 29 in the vehicle width direction, which is the right-side rear frame 29 in the present embodiment, of the pair of left and right rear frames 29 ··· from the upper surface of the power drive unit 71, and are aligned with a main harness 93 which is supported to the vehicle body B.

Next, the operation of the present embodiment will be described. The pivot plates 30 ··· are formed in lower portions of the pair of left and right rear frames 29 ··· of the body frame F, respectively. The swing arm 22, which is supported to the pivot plates 30 ··· with the support shafts 32 ··· therebetween in a swingable manner, houses the electric motor 23. The high-voltage battery 36, which supplies electric power to the electric motor 23, is arranged forward of the support shafts 32 ··· in such a manner as to be supported to the body frame F. The power drive unit 71 is disposed in the swing arm 22, the power drive unit 71 converting a direct current supplied from the high-voltage battery 36 into an alternating current and then supplying the alternating current to the electric motor 23. The first high-voltage wiring 86 which connects between the high-voltage battery 36 and the power drive unit 71 extends obliquely upwardly and forwardly toward one of the pair of left and right rear frames 29 ··· in the vehicle width direction (which is the left side in the present embodiment) from the upper surface of the power drive unit 71, and extends rearwardly and upwardly along the inner side of the one of the rear frames 29 in the vehicle width direction and then extends toward the high-voltage battery 36 located forward thereof.

Accordingly, it is possible to bend the first high-voltage wiring 86 in such a manner as to allow swing of the swing arm 22 while preventing a bending force to be applied to the first-high voltage wiring 86 during the swing of the swing arm 22. Further, by having the first high-voltage wiring 86 extending obliquely upwardly and forwardly from the upper surface of the power drive unit 71, it is possible to make the first high-voltage wiring 86 less visible from obliquely rearward of the vehicle. In addition, by hiding the high-voltage wiring 86 with the left-side rear frame 29, it is possible to make the first high-voltage wiring 86 less likely to stand out to the outside of the vehicle body B.

Further, the high-voltage battery 36 is not only connected to the first high-voltage wiring 86 but also connected to the second high-voltage wiring 87 connected to the receiver-side connector 78, which is connected via the DC-DC converter 79 to the feeder-side connector 77 for supplying of charging electric power. The first and second high-voltage wirings 86 and 87 are arranged in one side in the vehicle width direction (in the left side in the present embodiment) with respect to the center line C of the vehicle body B in the vehicle width direction. Accordingly, it is possible to achieve a compact arrangement by putting together, in one site, connecting portions of the first and second high-voltage wirings 86 and 87 to the high-voltage battery 36.

Moreover, the receiver-side connector 78 is arranged in the one side in the vehicle width direction of the vehicle body B (the left side in the present embodiment). Accordingly, the second high-voltage wiring 87 can be made shorter.

Further, the first and second high-voltage wirings 86 and 87 are covered by the under cover 45 and the side cover 48 of the vehicle body cover 41, which covers the body frame F in such a manner as to form the vehicle body B together with the body frame F. Accordingly, it is possible to make the first and second high-voltage wirings 86 and 87 less visible from the outside of the vehicle body B.

Further, the low-voltage wiring 92 leading to the control unit 84, which is installed inside the power drive unit 71, extends along the inner side of the other rear frame 29 in the vehicle width direction (the right side in the present embodiment) of the pair of left and right rear frames 29 from the upper surface of the power drive unit 71, and then is aligned with the main harness 93, which is supported to the vehicle body B. Accordingly, the low-voltage wiring 92 and the main harness 93 are arranged in a position away from the first and second high-voltage wirings 86 and 87. Therefore, it is possible to prevent noise from the first and second high-voltage wirings 86 and 87 from reaching the low-voltage wiring 92 and the main harness 93.

Hereinabove, the embodiment of the present invention has been described. The present invention is not limited to the above-described embodiment, and various design modifications are possible without departing from the gist of the present invention.

For example, the present invention is applicable to an electric three-wheeled vehicle as well.

## Claims

1. Electric two/three-wheeled vehicle with a wiring structure in which vehicle: pivot plates (30) are provided in lower portions of a pair of left and right rear frames (29), respectively, the rear frames (29) constituting a part of a body frame (F) and extending rearwardly and upwardly; an electric motor (23) is housed in a swing arm (22) supported in a swingable manner to the pivot plates (30) with a support shaft (32) therebetween, the electric motor (23) exerting power for driving a rear wheel (WR) pivotally supported to a rear portion of the swing arm (22); a high-voltage battery (36) supplying an electric power to the electric motor (23) is supported to the body frame (F) and arranged forward of the support shaft (32); the high-voltage battery (36) is connected via a high-voltage wiring (86) to a power drive unit (71) mounted on the swing arm (22) so as to convert a direct current supplied from the high-voltage battery (36) into an alternating current and then supply the alternating current to the electric motor (23), **characterized in that** the high-voltage wiring (86), which extends obliquely upwardly and forwardly toward one rear frame (29) in a vehicle width direction out of the pair of left and right rear frames (29) from an upper surface of the power drive unit (71), extends rearwardly and upwardly along an inner side of the one rear frame (29) in the vehicle width direction and then further extends toward the high-voltage battery (36) located forward thereof.

2. Electric two/three-wheeled vehicle according to claim 1, wherein a low-voltage wiring (92) leading to a control unit (84) installed in the power drive unit (71) extends from an upper surface of the power drive unit (71), then further extends along an inner side of the other rear frame (29) in the vehicle width direction out of the pair of left and right rear frames (29), and is aligned with a main harness (93) supported to a vehicle body (B).

3. Electric two/three-wheeled vehicle according to claim 1 or 2, wherein the high-voltage battery (36) is connected not only to the high-voltage wiring (86) that is a first high-voltage wiring connected to the power drive unit (71) but also to a second high-voltage wiring (87) connected via a DC-DC converter (79) to a receiver-side connector (78) connected to a feeder-side connector (77) for supplying charging electric power, and the first and second high-voltage wirings (86, 87) are arranged in one side in the vehicle width direction of the vehicle body (B) with respect to a center line in the vehicle width direction of the vehicle body (B).

4. Electric two/three-wheeled vehicle according to claim 3, wherein the receiver-side connector (78) is arranged in the one side in the vehicle width direction of the vehicle body (B).

5. Electric two/three-wheeled vehicle according to any of claims 1 to 4, wherein the high-voltage wiring (86) is covered by a vehicle body cover (41) which covers the body frame (F) so that the vehicle body cover (41) and the body frame (F) together form the vehicle body (B).

## Patentansprüche

1. Elektrisches zwei-/dreirädriges Fahrzeug mit einer Verkabelungsanordnung, wobei in dem Fahrzeug: Drehplatten (30) in tieferen Bereichen eines Paars aus linkem und rechtem hinteren Rahmen (29) vorgesehen sind, wobei die hinteren Rahmen (29) einen Teil eines Fahrzeugrahmens (F) bilden und sich nach hinten und oben erstrecken; ein elektrischer Motor (23) in einem Schwingenarm (22) untergebracht ist, der in schwenkbarer Weise an den Drehplatten (30) mit einer Trägerwelle (32) dazwischen getragen wird, wobei der elektrische Motor (23) eine Kraft zum Antreiben eines Hinterrads (WR) ausübt, das drehbar an einem hinteren Abschnitt des Schwingenarms (22) getragen wird; eine Hochspannungsbatterie (36), die dem elektrischen Motor (23) elektrische Leistung zuführt, an dem Fahrzeugrahmen (F) getragen wird und vorderhalb der Trägerwelle (32) angeordnet ist; die Hochspannungsbatterie (36) über eine Hochspannungsverkabelung (36) mit der Antriebseinheit (71) verbunden ist, die an dem Schwingenarm (22) montiert ist, um einen Gleichstrom, der von der Hochspannungsbatterie (36) zugeführt wird, in einen Wechselstrom zu konvertieren und dann den Wechselstrom dem elektrischen Motor (23) zuzuführen, **dadurch gekennzeichnet, dass** sich die Hochspannungsverkabelung (86), die sich aus dem Paar aus linkem und rechtem hinteren Rahmen (29) von einer oberen Oberfläche der Antriebseinheit (71) aus schräg nach oben und nach vorne auf einen hinteren Rahmen (29) zu erstreckt, in einer Fahrzeugbreitenrichtung nach hinten und oben entlang einer inneren Seite eines hinteren Rahmens (29) in der Fahrzeugbreitenrichtung erstreckt und sich dann weiter auf die Hochspannungsbatterie (36) zu erstreckt, die davor angeordnet ist.

2. Elektrisches zwei-/dreirädriges Fahrzeug gemäß Anspruch 1, wobei sich eine Niederspannungsverkabelung (92), die zu einer Steuereinheit (84) führt, die in der Antriebseinheit (71) installiert ist, von einer oberen Oberfläche der Antriebseinheit (71) erstreckt, sich dann weiter entlang einer inneren Seite des anderen hinteren Rahmens (29) in der Fahrzeugbreitenrichtung außerhalb des Paars aus linkem und rechtem hinteren Rahmen (29) erstreckt und mit einem Hauptkabelbaum (93) ausgerichtet ist, der an einem Fahrzeugrahmen (B) getragen wird.

3. Elektrisches zwei-/dreirädriges Fahrzeug gemäß Anspruch 1 oder 2, wobei die Hochspannungsbatterie (36) nicht nur mit der Hochspannungsverkabelung (86), die eine erste Hochspannungsverkabelung ist, die mit der Antriebseinheit (71) verbunden ist, verbunden ist, sondern auch mit einer zweiten Hochspannungsverkabelung (87), die mit einem DC-DC Konverter (79) mit einem empfängerseitigen Verbinder (78) mit einem speiseseitigen Verbinder (77) zum Zuführen von elektrischer Ladeleistung verbunden ist, und die erste und die zweite Hochspannungsverkabelung (86, 87) auf einer Seite in der Fahrzeugbreitenrichtung des Fahrzeugkörpers (B) im Bezug auf eine Mittenlinie in der Fahrzeugbreitenrichtung des Fahrzeugkörpers (B) angeordnet sind.

4. Elektrisches zwei-/dreirädriges Fahrzeug gemäß Anspruch 3, wobei der empfängerseitige Verbinder (78) auf einer Seite in der Fahrzeugbreitenrichtung des Fahrzeugkörpers (B) angeordnet ist.

5. Elektrisches zwei-/dreirädriges Fahrzeug gemäß einem der Ansprüche 1 bis 4, wobei die Hochspannungsverkabelung (86) durch eine Fahrzeugkarosserieabdeckung (41) abgedeckt wird, die den Fahrzeugrahmen (F) abdeckt, sodass die Fahrzeugkarosserieabdeckung (41) und der Fahrzeugrahmen (F) gemeinsam den Fahrzeugkörper (B) bilden.

## Revendications

1. Véhicule électrique à deux/trois roues avec une structure de câblage, dans lequel véhicule : on prévoit des plaques de pivot (30) dans des parties inférieures d'une paire de bâtis arrière gauche et droit (29), respectivement, les bâtis arrière (29) constituant une partie d'une ossature (F) et s'étendant vers l'arrière et vers le haut ; un moteur électrique (23) est logé dans un bras oscillant (22) supporté d'une manière oscillante sur les plaques de pivot (30) avec un arbre de support (32) entre elles, le moteur électrique (23) exerçant la puissance pour entraîner une roue arrière (WR) supportée de manière pivotante sur une partie arrière du bras oscillant (22) ; une batterie haute tension (36) fournissant une puissance électrique au moteur électrique (23) est supportée sur l'ossature (F) et agencée vers l'avant de l'arbre de support (32) ; la batterie haute tension (36) est raccordée, via un câblage haute tension (86), à une unité d'entraînement de puissance (71) montée sur le bras oscillant (22) afin de convertir un courant continu fourni par la batterie haute tension (36) en courant alternatif et ensuite fournir le courant alternatif au moteur électrique (23), **caractérisé en ce que** le câblage haute tension (86) qui s'étend de manière oblique vers le haut et vers l'avant vers un bâti arrière (29) dans le sens de la largeur du véhicule parmi la paire de bâtis arrière gauche et droit (29) à partir d'une surface supérieure de l'unité d'entraînement de puissance (71), s'étend vers l'arrière et vers le haut le long d'un côté interne dudit un bâti arrière (29) dans le sens de la largeur du véhicule et continue à s'étendre ensuite vers la batterie haute tension (36) positionnée à l'avant de ce dernier.

2. Véhicule électrique à deux/trois roues selon la revendication 1, dans lequel un câblage basse tension (92) menant à une unité de commande (84) installée dans l'unité d'entraînement de puissance (71) s'étend à partir d'une surface supérieure de l'unité d'entraînement de puissance (71), continue à s'étendre ensuite le long d'un côté interne de l'autre bâti arrière (29) dans le sens de la largeur du véhicule parmi la paire de bâtis arrière gauche et droit (29), et est aligné avec un faisceau de conducteurs (93) supporté sur un corps de véhicule (B).

3. Véhicule électrique à deux/trois roues selon la revendication 1 ou 2, dans lequel la batterie haute tension (36) est non seulement raccordée au câblage haute tension (86) qui est un premier câblage haute tension raccordé à l'unité d'entraînement de puissance (71) mais également à un second câblage haute tension (87) raccordé via un convertisseur CC-CC (79) à un connecteur du côté de la réception (78) raccordé à un connecteur du côté de l'alimentation (77) pour fournir la puissance électrique de chargement, et les premier et second câblages haute tension (86, 87) sont agencés dans un côté dans le sens de la largeur du véhicule du corps de véhicule (B) par rapport à une ligne centrale dans le sens de la largeur du véhicule du corps de véhicule (B).

4. Véhicule électrique à deux/trois roues selon la revendication 3, dans lequel le connecteur du côté de la réception (78) est agencé dans ledit un côté dans le sens de la largeur du véhicule du corps de véhicule (B).

5. Véhicule électrique à deux/trois roues selon l'une quelconque des revendications 1 à 4, dans lequel le câblage haute tension (86) est recouvert par un couvercle de corps de véhicule (41) qui recouvre l'ossature (F) de sorte que le couvercle de corps de véhicule (41) et l'ossature (F) forment ensemble le corps de véhicule (B).
